# EUROPEAN PATENT APPLICATION

(11) **EP 2 270 467 A1**
(43) Date of publication of application: **05.01.2011**
(21) Application number: 09164597.8
(22) Date of filing: 03.07.2009
(51) Int. Cl.: G01N 1/42

(54) **Method of and device for preparing samples for microscopy**

(71) Applicant: Universiteit van Maastricht, 6229 ER Maastricht (NL)
(72) Inventor: Frederik, Peter Michiel, 6211 NS, Maastricht (NL); Nijpels, Fransiscus Johannus Theresia, 6219 BD, Maastricht (NL)
(74) Representative: Aalbers, Arnt Reinier

(57) **Abstract**

The invention relates to a method of and device for preparing samples for microscopy, in particular for cryo-electron microscopy. The method comprises the following steps, which steps are carried out at a temperature below the melting temperature of water: partially or wholly covering the sample with a liquid solution of an encapsulant in a solvent, and evaporating the solvent thus partially or wholly encapsulating the sample.

## Description

The invention relates to a method of and a device for preparing samples for microscopy, in particular for cryo-electron microscopy.

As explained in international patent application WO 02/077612, in cryo-electron microscopy, samples are generally prepared by immersing a so-called grid in a suspension of particles to be examined, e.g. cells or protein molecules, and removing the excess suspension by blotting, i.e. by pressing blotting paper or another medium that readily absorbs liquid against the grid on one side or on both sides thereof. As a result of blotting, the thickness of the film that is present in the openings of the grid is reduced, for example from 3 - 4 µm to 100 nm. In a film of such minimal thickness, an area which is even thinner develops in the centre of the film under the influence of the London/van der Waals attraction of the air/fluid boundary layers, which area slowly expands in outward direction, i.e. in the direction of the edge of the respective opening in the grid. During this process, which is also referred to as draining, the suspended particles are trapped between the fluid surfaces. As a next step, the sample is cooled down almost instantaneously by means of so-called plunge-freezing, to vitrify the sample.

Thin vitrified objects up to about 500nm thick can be studied in 3D by cryo-EM tomography. In thicker objects, resolution is hampered by a decrease in the signal to noise (S/N) ratio and an increase in electron beam induced damage to the sample. Put differently, thicker objects have an higher stopping power for the electron beam of the microscope and the resulting S/N reduction cannot be compensated by increasing the dose (electrons per square nm). To fully exploit the resolving power of cryo-EM tomography of objects thicker than 500nm, further processing is required. However, further processing by cryo-sectioning or an (cryo) ion-beam is complicated because of the vulnerability (mechanical, thermal) of such samples.

It is an object of the present invention to improve and/or facilitate further processing of samples for microscopy, in particular cryo-electron microscopy.

To this end, the method according to the present invention comprises the following steps, which steps are carried out at a temperature below the melting temperature of water: partially or wholly covering the sample with a liquid solution of an encapsulant in a solvent, and evaporating the solvent thus partially or wholly encapsulating the sample.

To accelerate evaporating the solvent, it is preferred to subject the sample to a vacuum, i.e. a reduced pressure preferably lower than 0,5 bar, more preferably lower than 0,2 bar.

In a preferred embodiment, heat is supplied to the sample prior to or during vacuum evaporation, to prevent the solvent from freezing during evaporation. As the encapsulant typically has a melting temperature that is considerably higher than that of the solvent - in fact, it is preferred that the encapsulant is a solid at the temperature at which the sample is prepared -, freezing of the solution can result in the encapsulant and solvent separating. Alternatively, the vapor flow could be restricted to match heat input and heat output.

To obtain low concentrations of the solvent in the encapsulated sample, it is preferred that the ratio of the vapor pressure of the solvent and the vapor pressure of the encapsulant is in excess of 10, preferably in excess of 100.

In a preferred solution, the solvent is selected from ethane, propane, ethylene and mixtures thereof and the encapsulant is selected from methanol, ethanol, acetone, diethyl ether, and mixtures thereof.

If the method is used to prepare vitrified samples, evaporation of the solvent is carried out at a temperature below the glass transition temperature of water, preferably close to the glass transition temperature of water e.g. at a temperature in a range from -155 °C to -140 °C, preferably in a range from -150 °C to -140 °C.

In an embodiment, after sufficient solvent has been evaporated, the sample is subjected to freeze substitution to dissolve ice present in the sample in the encapsulant. In this case, the encapsulant, if not already a liquid, should be brought in the liquid phase, preferably by supplying heat. The encapsulant, once in the liquid phase, becomes a solvent for ice and water. In a further embodiment, the encapsulant contains a polymerizable compound, e.g. a monomer or polymerizable oligomer known in itself.

In another embodiment, the sample is cut from a block by means of a sectioning system, e.g., a cryo-ultramicrotome, and one or more of the samples, typically very thin slices or a ribbon of such slices, are adhered to a substrate, such as a grid for electron microscopy, by means the solution. The block itself can be prepared by encapsulating as outlined above, i.e. be a sample prepared by means of the present invention.

The invention further relates to a device for preparing samples for microscopy, in particular for cryo-electron microscopy, comprising a receptacle for a liquid solution of an encapsulant in a solvent and a means for evaporating the solvent thus partially or wholly encapsulating the sample.

The invention also relates to a low temperature sectioning system for preparing samples for microscopy, in particular an cryo-ultramicrotome for cryo-electron microscopy, comprising a holder and a knife movable relative to each other to cut samples from a block in the holder. The system further comprises an applicator for partially or wholly covering the sample with a liquid solution of an encapsulant in a solvent.

In a preferred embodiment, the holder, knife, and applicator are positioned in a cooling chamber, preferably a cooling chamber that can be cooled to temperatures below -140°C, and the chamber further contains at least one receptacle for the liquid solution and a blotting medium. It is preferred that the applicator can be operated from outside the chamber, either directly or 'by wire'. The system preferably comprises means for controlling the temperature of the at least one receptacle.

Within the framework of the present invention, the glass transition temperature of water is defined as the temperature at which vitrified water shifts to cubic ice. This temperature depends on the rate with which the temperature of the vitrified water is increased. At temperatures below -140 °C the vitrified state of water is maintained.

The term "cryo-ultramicrotomy" refers to cryo-sectioning of slices having a thickness of less than 500 nm, typically less than 100 nm or even less than 50 nm.

The invention will now be explained in more detail with reference to figures, which schematically show an example of devices and methods according to the present invention.
Figure 1 is a cross-section through a device for preparing vitrified samples in accordance with the present invention.
Figure 2 is an enlargement of part of the device in Figure 1.
Figure 3 is a cross-section through a receptacle for receiving a sample (e.g. directly from a Vitrobot™) and to be placed in the device shown in Figure 1.
Figures 4 and 5 show the steps of vacuum distillation in and removal of an encapsulated sample from the device shown in Figure 1.
Figures 6A to 6C show parts of a cryo-ultramicrotome comprising a sample holder and a knife.
Figures 7A to 9 show a process of cutting thin sections and adhering the sections to a grid.

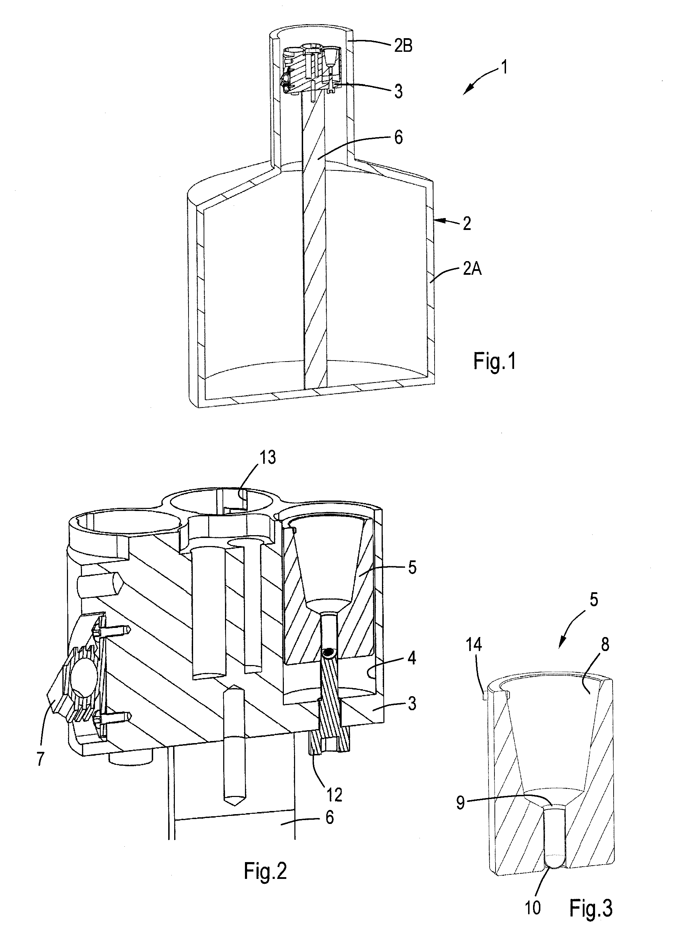

Figures 1-3 show a device 1 for temporarily storing and vacuum distilling vitrified samples, which device comprises a dewar 2 having a relatively broad lower portion 2A holding a coolant, typically liquid nitrogen, and a neck 2B. A platform 3 (Figure 2) made of a heat conducting material, e.g. a metal such as aluminium, and comprising, in its top part, a plurality of cavities 4 for accommodating receptacles 5 (shown in more detail in Figure 3) for samples is placed in the dewar 2.

In this example, the platform 3 is provided, in or on its bottom part, with a rod-like thermal conductor 6, also made of a metal such as aluminium. The conductor 6 extends into the coolant and to the bottom of the dewar 2. Thus, the platform 3 rests on the bottom of the dewar 2 by means of the conductor 6 and is positioned in the neck 2B of the dewar 2 several centimetres above the coolant.

The platform 3 further comprises one or more heating elements, in this example electrical resistors 7 positioned between each pair of cavities 4, and one or more temperature sensors, e.g. resistive temperature devices such as Pt100. In this configuration, the temperature in the receptacles 5 can be controlled in a relatively straightforward and robust manner, i.e. by measuring the temperature of the platform 3, which is continuously cooled via the conductor 6 and the coolant beneath, and adding heat when the temperature drops below a pre-selected threshold.

The receptacles 5 each comprise a stepped conical cavity 8 for holding a liquid and ending in a bore 9 through the bottom of the receptacle. The bore 9 is dimensioned to hold by friction a vial or capsule 10 for receiving a sample 11.

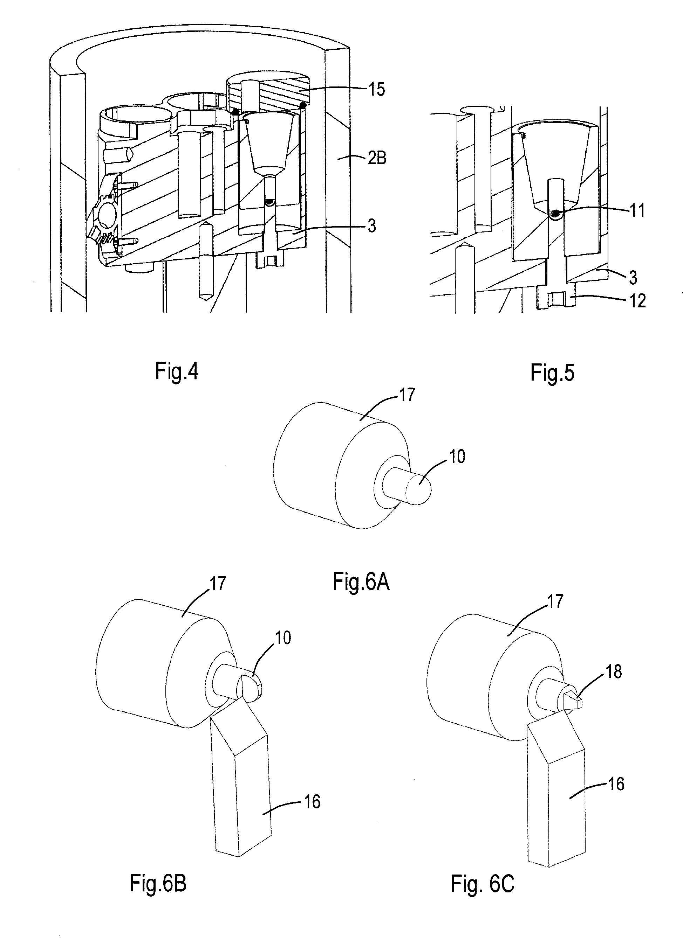

The height of the receptacle 5 is smaller than the depth of the cavities 4 in the platform 3 enabling at least two relative positions. Each of the cavities 4 is provided at its bottom with a central pin 12 and in its wall with a notch 13, part of which extends in a horizontal direction and another part of which extends in a vertical direction. The outer wall of the receptacle 5 is provided with a protrusion e.g. a short pin 14, which cooperates with the notch 13 in the inner wall of the cavity 4 in which it is placed, thus providing a first, relatively high position (Figure 4) wherein the receptacle 5 is suspended from the inner wall of the cavity 4 and the capsule 10 is in place and a second, relatively low position (Figure 5) wherein the capsule 10 containing the sample is pushed from the bore 9 and into the stepped conical cavity 8.

Preparing a sample for microscopy can be carried out as follows:
- placing a capsule 10 made of e.g. gelatine or a synthetic polymer in the lower, narrow section, i.c. the bore 9, of one or more receptacles 5,
- placing the receptables 5 in the platform 3 and cooling the receptacles 5 to a temperature well below the glass transition temperature of water and above the freezing temperature of ethane, e.g. to -170°C,
- condensing ethane gas on the inner wall of the receptacles or filling the receptacles with liquid ethane,
- dissolving the encapsulant in the solvent at a temperature between the melting temperature of the encapsulant and the boiling point of the solvent, in this example by heating the liquid ethane to a temperature near its boiling point (-88 °C at atmospheric pressure) and dissolving 0.3 ml methanol in 10 ml ethane in each receptacle 5,
- again cooling the receptacles 5 to a temperature well below the glass transition temperature of water and above the freezing temperature of ethane, e.g. to -170°C,
- placing a receptacle 5 in a nitrogen container and in or under a vitrification device, such as a Vitrobot™, containing a grid 11 carrying a sample obtained by means of a procedure as described in WO 02/077612,
- plunging the grid 11 carrying the sample in the solution by means of the device, thus vitrifying the sample in the solution,
- releasing the grid 11 from the device, i.e. dropping the grid 11 in the gelatine capsule 10,
- transferring the receptacle 5 to the platform 3, which platform is still at a temperature of -170°C,
- heating the receptacle and its contents to a temperature in a range from -150 to -140 °C, e.g. to -142 °C,
- sealing the receptacle 5 by means of a cap 15 (Figure 4) connected to a vacuum pump (not shown) and vacuum distilling the solution, thus increasing the concentration of methanol in the solution and surrounding the sample until substantially all ethane has been evaporated and the sample is wholly encapsulated in methanol, which, at this temperature, resembles a plastic,

thus obtaining a vitrified sample that can be further handled and processed.

Examples of subsequent handling an processing include, but are not limited to, cryo-ultramicrotomy, shown in Figures 6A to 9, and freeze substitution.

In the procedure shown in Figures 6A to 9, the capsule 10 containing the vitrified sample 11 is transferred to a cryo-ultramicrotome comprising a knife 16 and a sample holder 17 which is accurately movable in radial directions (up and down) and axial direction relative to the knife. Suitable cryo-ultramicrotomes are commercially available.

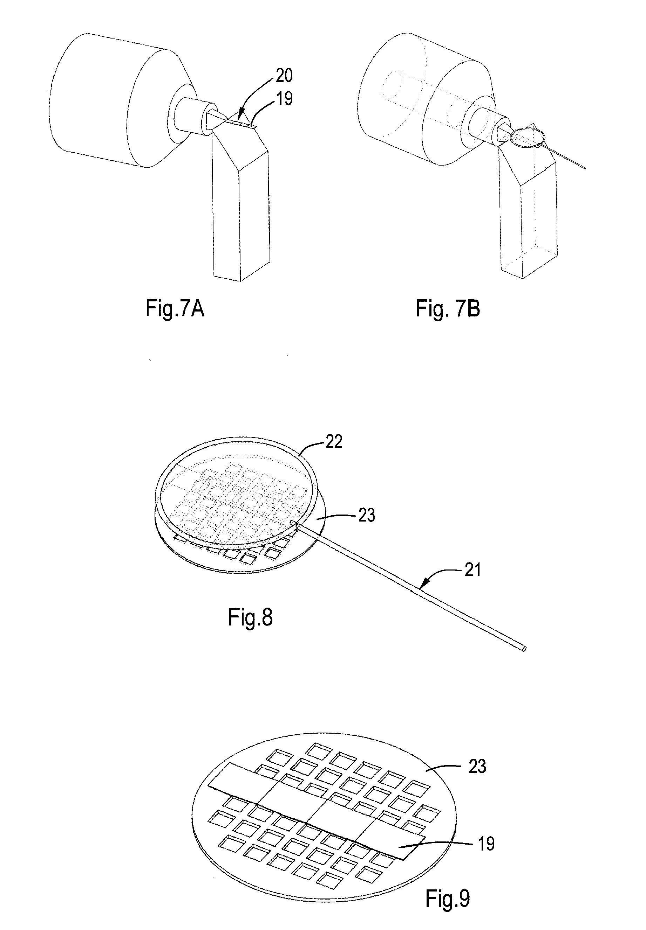

The capsule 10 is clamped in the sample holder 17 (Figure 6A) and parts of the capsule 10, the frozen encapsulant and the sample 11 are cut away (Figures 6B and 6C) to form a trapezium shaped 18 end in the sample. Next, slices 19 are cut from the sample 11 by means of the knife 16, which slices 19, in practice, stick together at their end portions forming a so-called ribbon 20 (Figure 7A).

The slices 19 are subsequently contacted, by means of an applicator 21, with the same solution as used for vitrification and encapsulation (Figure 7B). In this example, the applicator comprises a loop 22, e.g. made of metal wire, such as platinum, stainless steel or titanium wire, or of a polymer, and an amount of the solution is held in loop. The samples 19 adhere to or become submerged in the solution and are subsequently transferred to a grid 23 (Figure 8).

The grid 23, in turn, is placed in a holder for a cryo electron microscope. The vacuum in the pre-pumping airlock of the microscope and/or in the microscope column vacuum distils the ethane. A very thin layer of 2 to 50 nm of methanol is left behind, adhering the samples 19 to the grid 23 and providing conduction of heat and electricity.

In an alternative route, mentioned above, the sample, after vacuum distillation in the receptacle, can be subjected to freeze substitution, in particular to replace water in the sample with the encapsulant. Substitution after the vacuum distillation can be carried at different temperatures, e.g. at -140, -90 ,-60, and -30 °C over a period of several hours up to several days. In this process, the water in the specimen is substituted by the methanol through successive washes and replenishment with cold and fresh (water-free) methanol to gradually accomplish dehydration.

The invention is not restricted to the above-described embodiments, which can be varied in several ways without departing from the scope of the invention as defined in the claims. For instance, the samples can be fractured and the fracture face studied by low temperature replication or by low temperature atomic force microscopy.

## Claims

1. Method of preparing a sample for microscopy, in particular for cryo-electron microscopy, comprising the following steps, which steps are carried out at a temperature below the melting temperature of water:
partially or wholly covering the sample with a liquid solution of an encapsulant in a solvent, and
evaporating the solvent thus partially or wholly encapsulating the sample.

2. Method according to claim 1, wherein the sample is subjected to a vacuum.

3. Method according to claim 1 or 2, wherein the sample is heated to prevent the solvent from freezing during evaporating the solvent.

4. Method according to any one of the preceding claims, wherein the ratio of the vapor pressure of the solvent and the vapor pressure of the encapsulant is in excess of 10, preferably in excess of 100.

5. Method according to any one of the preceding claims, wherein the sample is vitrified in the liquid solution.

6. Method according to any one of the preceding claims, wherein said steps are carried out at a temperature below the glass transition temperature of water, preferably at a temperature below -140°C.

7. Method according to any one of the preceding claims, wherein the sample is subjected to freeze substitution to dissolve ice present in the sample in the encapsulant.

8. Method according to any one of the preceding claims, wherein the sample is cut from a block by means of sectioning system and one or more of the samples are adhered to a substrate by means the solution.

9. Method according to claim 8, wherein excess solution is removed before the solvent is evaporated.

10. Method according to any one of the preceding claims, wherein the solvent is selected from ethane, propane, ethylene and mixtures thereof and the encapsulant is selected from methanol, ethanol, acetone, diethyl ether, and mixtures thereof.

11. Device (1) for preparing samples (11) for microscopy, in particular for cryo-electron microscopy, comprising a receptacle (5) for a liquid solution of an encapsulant in a solvent and the sample (11), and a means (7, 15) for evaporating the solvent thus partially or wholly encapsulating the sample (11).

12. Device (1) according to claim 11, wherein the receptacle (5) comprises a stepped conical cavity for holding the liquid solution and/or a bore (9) through the bottom of the receptacle for holding a vial or capsule (10) for receiving a sample (11).

13. Low temperature sectioning system for preparing samples for microscopy, in particular a cryo-ultramicrotome for cryo-electron microscopy, comprising a holder (17) and a knife (16) movable relative to each other to cut samples (19) from a block (10) in the holder (17), and **characterized by** an applicator (21) for partially or wholly covering the sample (19) with a liquid solution of an encapsulant in a solvent.

14. Sectioning system according to claim 13, wherein the holder (17), knife (16), and applicator (21) are position in a cooling chamber and wherein the chamber further contains at least one receptacle for the liquid solution and a blotting medium.

15. Sectioning system according to claim 13 or 14, comprising means for controlling the temperature of the at least one receptacle.
